# EUROPEAN PATENT APPLICATION

(11) **EP 4 354 296 A1**
(43) Date of publication of application: **17.04.2024**
(21) Application number: 22200641.3
(22) Date of filing: 10.10.2022
(51) Int. Cl.: G06F 9/54, G06Q 20/00

(54) **TRANSACTION MANAGER**

(71) Applicant: IPCO 2012 Limited, London EC4R 3AB (GB)
(72) Inventor: MASTERS, Neil, West Yorkshire, HD6 2SS (GB)
(74) Representative: Gill Jennings & Every LLP

(57) **Abstract**

A method performed by a transaction manager for processing a plurality of transactions among a plurality of network entities, the method comprising: for each transaction: receiving, from a first network entity, a first transaction request to perform a transaction with a second network entity; selecting a transaction request queue from a plurality of configured transaction request queues; adding the first transaction request to the back of the selected transaction request queue; when the first transaction request reaches the front of the selected transaction request queue, processing the first transaction request by a transaction request handler associated with the selected transaction request queue and sending a second transaction request to the second network entity; receiving a first transaction response from the second network entity, in response to the second transaction request; selecting a transaction response queue from a plurality of configured transaction response queues; adding the first transaction response to the back of the selected transaction response queue; and when the first transaction response reaches the front of the selected transaction response queue, processing the first transaction response by a transaction response handler associated with the selected transaction response queue and sending a second transaction response to the first network entity.

## Description

### FIELD OF THE INVENTION

The invention relates to transactions between different entities via a network. Specifically, the invention relates to systems which can manage and support large numbers of transactions in a network.

### BACKGROUND

Two or more entities connected to a network may exchange information in a transaction for a variety of reasons including: a first entity requesting information from a second entity, and a first entity pushing information to a second entity to trigger a response. Such interactions typically comprise a request and a response, both of which are performed asynchronously (i.e. without prior agreement on timing).

In order to facilitate asynchronous processing of transactions, it is known to provide a queue which can hold the request or the response until the respective entity is ready to process them.

Additionally, in order to manage transactions among network entities in a consistent and entity-independent manner, it is known to provide a transaction manager in the network which acts as an intermediary.

It is desirable to provide a transaction manager with a scalable design that can handle transactions quickly and reliably regardless of the number of entities in the network and the number of transactions which are occurring.

### SUMMARY OF INVENTION

According to a first aspect, the present invention provides a method performed by a transaction manager for processing a plurality of transactions among a plurality of network entities, the method comprising, for each transaction: receiving, from a first network entity, a first transaction request to perform a transaction with a second network entity; selecting a transaction request queue from a plurality of configured transaction request queues; adding the first transaction request to the back of the selected transaction request queue; when the first transaction request reaches the front of the selected transaction request queue, processing the first transaction request by a transaction request handler associated with the selected transaction request queue and sending a second transaction request to the second network entity; receiving a first transaction response from the second network entity, in response to the second transaction request; selecting a transaction response queue from a plurality of configured transaction response queues; adding the first transaction response to the back of the selected transaction response queue; and when the first transaction response reaches the front of the selected transaction response queue, processing the first transaction response by a transaction response handler associated with the selected transaction response queue and sending a second transaction response to the first network entity.

By configuring a plurality of transaction request queues and a plurality of transaction response queues, the processing overhead for queue management per transaction can be reduced. In one test, the inventors found that using a plurality of queues enabled an increase of 100% to 200% in the number transactions which can be handled per second when compared to using a single queue. The number of queues may be preconfigured based on expected maximum requirements. Preferably the number of queues is an integer power of 2. Alternatively, the number of queues may adapt dynamically depending on a variable transaction rate for the network.

Preferably, selecting the transaction request queue comprises performing load balancing for the plurality of configured transaction request queues; and selecting the transaction response queue comprises performing load balancing for the plurality of configured transaction response queues.

Herein, load balancing comprises techniques for effectively distributing the total transaction request management and processing between the queues, and reducing the time and processing resources required per transaction across the plurality of queues. Load balancing may comprise selecting each transaction request queue in turn as a plurality of transaction requests are received. Alternatively, load balancing may comprise analysis of expected processing or memory requirements for transactions which are currently in a queue or which are to be added to a queue. Load balancing may also involve setting limits on the maximum capacity of a queue (e.g., a maximum number of transaction requests or transaction responses).

Preferably, for at least one of the plurality of configured transaction request queues, a plurality of transaction request handlers are associated with the transaction request queue to process multiple transaction requests from the transaction request queue simultaneously; and/or for at least one of the plurality of configured transaction response queues, a plurality of transaction response handlers are associated with the transaction response queue to process multiple transaction responses from the transaction response queue simultaneously.

Herein, a transaction request handler may be a process which begins and ends with handling of a single transaction request. In that case, the "plurality of transaction request handlers" refers to an upper limit on the number of transaction requests which can be processed simultaneously. Similarly, a transaction response handler may be a process which beings and ends with handling of a single transaction response. In that case, the "plurality of transaction response handlers" refers to an upper limit on the number of transaction responses which can be processed simultaneously. Alternatively, a transaction request handler or a transaction response handler may be persistent and configured to obtain a new transaction request or transaction response from its corresponding queue whenever it completes processing a previous transaction request or transaction response.

By supporting parallel processing of the transaction requests or responses in a given queue, the time per transaction for the queue can be reduced. Additionally, by enabling different queues to have different numbers of transaction request handlers or transaction response handlers, the transaction manager can flexibly adapt to different use cases. Furthermore, the number of transaction request handlers or transaction response handlers may be adapted dynamically, for example by increasing as the number of transaction requests/responses in the corresponding queue increases.

Preferably, the method comprises discarding a transaction request from a transaction request queue if the transaction request exceeds a first predetermined age before being processed.

By discarding unprocessed transaction requests which exceed the first predetermined age limit, the transaction manager reduces the resources expended per successful transaction. More specifically, there is usually a time limit for how long the first entity will wait to complete a transaction. This time limit of the first entity is not necessarily known by the transaction manager, and the time limit may be different depending on which entity is the first entity for a given transaction. However, the first predetermined age may be set for the transaction manager based on an estimate of the time limit of the first entity. Unprocessed transactions exceeding the predetermined age limit are likely to fail when they are eventually processed, and it may be preferable not to process them at all in order to conserve processing resources.

More preferably, after discarding the transaction request from the transaction request queue, the method further comprises: sending a transaction failure message to the first network entity.

By explicitly notifying the first network entity about a transaction failure, the transaction manager can increase the rate of successful transactions by reducing the time expended by the first network entity waiting for the failed transaction.

Preferably, the method comprises discarding a transaction response from a transaction response queue if the transaction response exceeds a second predetermined age before being processed.

By discarding unprocessed transaction responses which exceed the second predetermined age limit, the transaction manager reduces the resources expended per successful transaction. More specifically, there is usually a time limit for how long the first entity will wait to complete a transaction. This time limit of the first entity is not necessarily known by the transaction manager, and the time limit may be different depending on which entity is the first entity for a given transaction. However, the first predetermined age may be set for the transaction manager based on an estimate of the time limit of the first entity. Unprocessed transaction responses exceeding the second predetermined age limit are likely to fail when they are eventually processed, and it may be preferable not to process them at all in order to conserve processing resources.

More preferably, after discarding the transaction response from a transaction response queue, the method comprises: re-sending the second transaction request to the second network entity.

By re-sending the second transaction request, unnecessary repetition of receiving and processing the first transaction request can be avoided.

Preferably, processing the first transaction request comprises adding a first transaction record to a database of ongoing transactions; and/or processing the first transaction response comprises updating the first transaction record.

More preferably, the first transaction record comprises the first transaction request or the second transaction request. For example, the first transaction record may comprise either or both of: an initial message received by the transaction manager from the first network entity to initiate a transaction with the second network entity; and a corresponding message sent by the transaction manager to the second network entity.

By using a database of ongoing transactions, the transaction manager can improve consistency within multi-stage transactions and can support the use of transaction request information when processing a corresponding transaction response.

Preferably, the first transaction request comprises a timestamp; and/or the first transaction response comprises a timestamp. The use of timestamps is one way of enabling discarding of transaction requests/responses.

In some embodiments, processing the first transaction response and sending the second transaction response to the first network entity comprises: sending, to a third network entity, a third transaction request based on the first transaction response; receiving a third transaction response from the third network entity, in response to the third transaction request; selecting a transaction response queue from a plurality of configured transaction response queues; adding the third transaction response to the back of the selected transaction response queue; when the third transaction response reaches the front of the selected transaction response queue, processing the third transaction response and sending the second transaction response to the first network entity. More generally, the invention supports arbitrarily complex transactions between multiple network entities.

In some embodiments, the network entities are bank entities configured to perform payment transactions via the transaction manager. Electronic banking involves very large numbers of transactions between a significant number of different banks. The present invention is particularly valuable in such a context where correct and timely completion of transactions is highly important.

According to a second aspect, the present invention provides a non-transitory computer-readable storage medium storing instructions thereon which, when executed by one or more processors, cause the processors to perform the method of the first aspect.

According to a third aspect, the present invention provides a transaction manager apparatus configured to perform a method according to the first aspect.

According to a fourth aspect, the present invention provides a system comprising: a plurality of network entities; and a transaction manager apparatus according to the third aspect, configured to process a plurality of transactions among the plurality of network entities.

### BRIEF DESCRIPTION OF DRAWINGS

Embodiments of the present invention are described below, by way of example only, with reference to the accompanying drawings, in which:
Fig. 1 schematically shows a system wherein a plurality of network entities perform transactions with each other;
Fig. 2 schematically shows a transaction manager for processing a plurality of transactions among a plurality of network entities; and
Fig. 3 schematically shows a method for processing a plurality of transactions among a plurality of network entities.

### DETAILED DESCRIPTION

Various aspects of the invention are now described with reference to the accompanying drawings. The description and specific examples included herein are intended for purposes of illustration only and are not intended to limit the scope of the present disclosure.

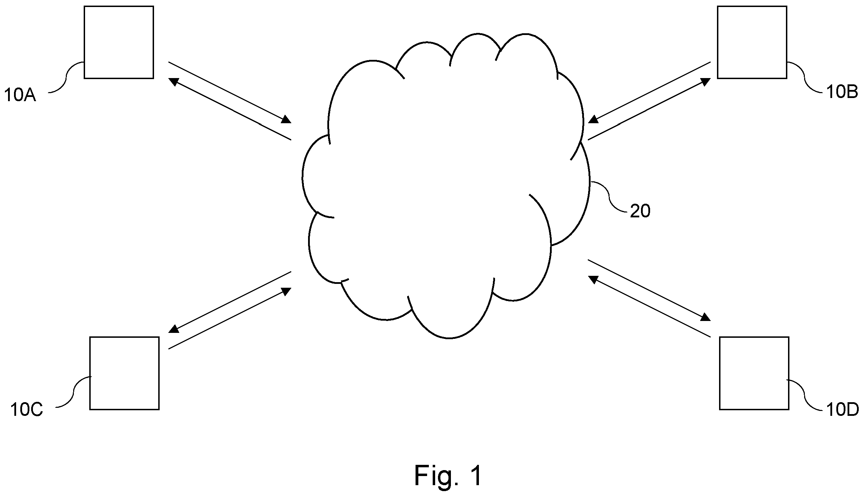

Fig. 1 schematically shows a system wherein a plurality of network entities perform transactions with each other. More specifically, each of the network entities 10A, 10B, 10C, 10D sends messages to and receives messages from the network 20. The network 20 processes and routes messages to manage completion of transactions based on the messages.

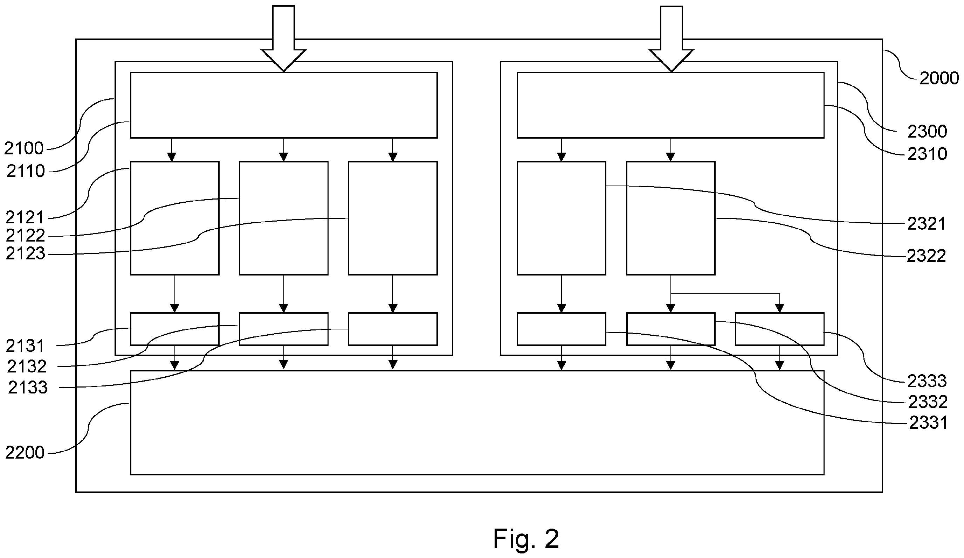

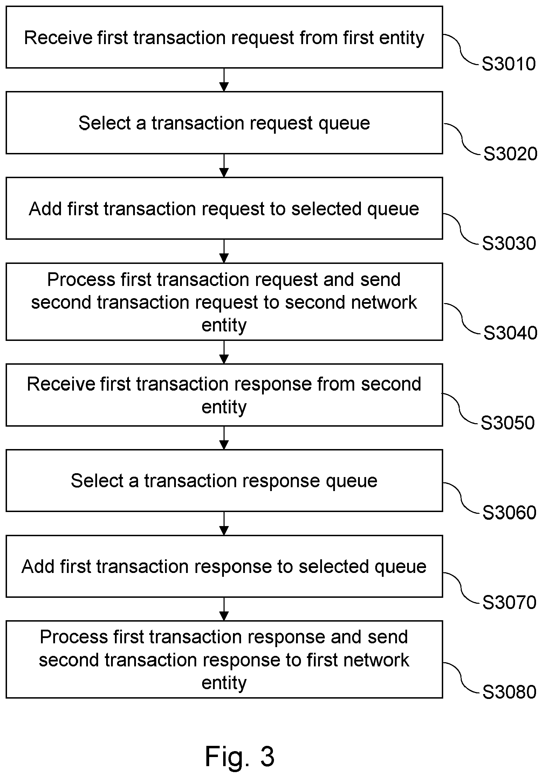

Figs. 2 and 3 provide alternative illustrations of transaction management according to the invention. Fig. 2 illustrates functional modules of a transaction manager 2000 which can handle multiple transaction requests and transaction responses in parallel. On the other hand, Fig. 3 is a flow chart illustrating how a single transaction is processed.

It should be noted that the transaction manager 2000 does not require any specific hardware implementation, and may be localized in the processor and memory hardware of a single computing device, or may be distributed across multiple computing devices each having respective processor(s) and memory(s). For example, the transaction manager may be implemented on a virtual machine or in a cloud computing environment. The transaction manager 2000 may be implemented as software, for example in the Erlang or Java languages. Compiled, partially compiled or uncompiled software defining the transaction manager may be stored as data in a signal or in a non-transitory computer-readable storage medium. As such, when executed by a processor (after compilation if necessary) in a network 20 as shown in Fig. 1, the software carries out the functions of the transaction manager.

The transaction manager 2000 comprises a transaction request module 2100, an ongoing transaction database 2200 and a transaction response module 2300. The transaction request module and transaction response module perform largely similar functions for transaction requests and transaction responses respectively.

The transaction request module 2100 is configured to receive transaction requests. Transaction requests may comprise: an identifier of the network entity which generated the transaction request; an identifier of a network entity which is the target of the transaction request; a timestamp for the transaction request (e.g. when the transaction request was generated or when the transaction request was received by the transaction manager 2000); a transaction type; and/or payload data for the specific transaction being performed.

The transaction response module 2300 is configured to receive transaction responses. Transaction responses may comprise: an identifier of the network entity which generated the transaction response; an identifier of a network entity which is the target of the transaction response; a timestamp for the transaction response (e.g. when the transaction response was generated or when the transaction response was received by the transaction manager 2000); and/or payload data for the specific transaction being performed.

Each of the modules 2100 and 2300 comprises a respective plurality of queues. The transaction request module 2100 comprises transaction request queues 2121, 2122 and 2123. The transaction response module 2300 comprises transaction response queues 2321 and 2322. In this example, there are three request queues and two response queues, but more generally there may be any number of two or more request queues and any number of two or more response queues.

Each of the queues may be actively managed to remove old transaction requests and responses which were not processed within a predetermined time limit. Alternatively, checking the time limit may be a first step of processing a transaction request or transaction response, such that no separate management process is required. The time limit may be the same for all queues, different for each queue, or different for each queue type (i.e. transaction request queues as a first type and transaction response queues as a second type).

The transaction manager 2000 may be configured to take a further action after discarding a transaction request or a transaction response from a queue. For example, the transaction manager may be configured to, after removing a transaction request, notify the network entity which generated the transaction request. Alternatively, the transaction manager may be configured to, after removing a transaction response, notify the network entity which generated the transaction response, so that the transaction response can be generated again.

Each of the modules 2100 and 2300 further comprises a distributor 2110, 2310. The transaction request distributor 2110 receives transaction requests from one of the network entities 10A, 10B, 10C, 10D and selects which of the plurality of transaction request queues 2121, 2122, 2123 the transaction request will be added to. The transaction response distributor 2310 receives transaction responses from one of the network entities 10A, 10B, 10C, 10D and selects which of the plurality of transaction response queues 2321, 2322 the transaction response will be added to. In other embodiments, each of the modules 2200 and 2300 may comprise more than one distributor 2110, 2130.

Each of the modules 2100 and 2300 further comprises at least one handler corresponding to each queue. The transaction request module 2100 comprises a transaction request handler 2131, 2132, 2133 for each of the transaction request queues 2121, 2122, 2123. The transaction response module 2300 comprises one transaction response handler 2331 corresponding to one transaction response queue 2321, and two transaction response handlers 2332, 2333 corresponding to another transaction response queue 2322. In other words, the contents of queues 2121, 2122, 2123 and 2321 are processed one-at-a-time, and the contents of queue 2322 are processed two-at-a-time. Prioritising transaction response processing more highly than transaction request handling may help to reduce the processing resources per successful transaction, by decreasing the chance that a transaction fails after a transaction response has been generated and thereby decreasing the average cost of a failed transaction.

Each time a transaction request or transaction response is processed, the handler may update the ongoing transaction database 2200. The ongoing transaction database 2200 records the state of ongoing transactions. For each ongoing transaction, the database 2200 may store: a unique transaction identifier; identifiers of the parties to the transaction; a timestamp for the transaction; a transaction type; and/or payload data for the specific transaction being performed.

Referring to Figs. 2 and 3, the processing of a single transaction between a first network entity 10A and a second network entity 10B will now be described.

At step S3010, the transaction request distributor 2110 receives a first transaction request from the first network entity 10A.

At step S3020, the transaction request distributor 2110 selects a transaction request queue 2121 from the plurality of configured transaction request queues 2121, 2122, 2123. This selection may be based on load balancing for the plurality of the configured transaction request queues 2121, 2122, 2123.

At step S3030, the transaction request distributor 2110 adds the first transaction request to the back of the selected transaction request queue 2121. The first transaction request then progresses forward through the queue 2121 as successive transaction requests are removed from the front of the queue and processed.

Eventually, at step S3040, the first transaction request reaches the front of the selected transaction request queue 2121, and the transaction request handler 2131 processes the first transaction request and sends a second transaction request to the second network entity 10B. The second transaction request may be identical to the first transaction request, in which case processing the first transaction request simply comprises sending the first transaction request to the second network entity 10B and, optionally, adding the first transaction to the ongoing transactions database 2200.

At step S3050, the transaction response distributor 2310 receives a first transaction response from the second network entity 10B, as a response to the second transaction request.

At step S3060, the transaction response distributor 2310 selects a transaction response queue 2322 from a plurality of configured transaction response queues 2321, 2322. This selection may be based on load balancing for the plurality of the configured transaction response queues 2321, 2322.

At step S3070, the transaction response distributor 2310 adds the first transaction response to the back of the selected transaction response queue 2322. The first transaction response then progresses forward through the queue 2322 as successive transaction responses are removed from the front of the queue and processed.

Eventually, at step S3080, the first transaction response reaches the front of the selected transaction request queue 2322. In this case, because the selected transaction request queue 2322 has two transaction response handlers 2332 and 2333, the "front" of the selected transaction request queue 2322 means the first or second position in the queue. More generally, if a queue has N handlers, then the "front" of the queue comprises the first N positions in the queue. The transaction response handler 2233 processes the first transaction response and sends a second transaction response to the first network entity 10A. The second transaction response may be identical to the first transaction response, in which case processing the first transaction response simply comprises sending the first transaction response to the first network entity 10A and, optionally, modifying or removing the first transaction in the ongoing transactions database 2200.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense. While the disclosure has been described in terms of various specific embodiments, those skilled in the art will recognize that the disclosure can be practiced with modification within the scope of the claims.

As used herein, the term "non-transitory computer-readable media" is intended to be representative of any tangible computer-based device implemented in any method or technology for short-term and long-term storage of information, such as, computer-readable instructions, data structures, program modules and submodules, or other data in any device. Therefore, the methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Moreover, as used herein, the term "non-transitory computer-readable media" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the foregoing specification, the above-described embodiments of the disclosure may be implemented using computer programming or engineering techniques including computer software, firmware, hardware or any combination or subset thereof, wherein the technical effect is enabling sensitive data such a cryptogram to be passed to the devices in a secure manner. Any such resulting program, having computer-readable code means, may be embodied or provided within one or more computer readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

## Claims

1. A method performed by a transaction manager for processing a plurality of transactions among a plurality of network entities, the method comprising:
for each transaction:
receiving, from a first network entity, a first transaction request to perform a transaction with a second network entity;
selecting a transaction request queue from a plurality of configured transaction request queues;
adding the first transaction request to the back of the selected transaction request queue;
when the first transaction request reaches the front of the selected transaction request queue, processing the first transaction request by a transaction request handler associated with the selected transaction request queue and sending a second transaction request to the second network entity;
receiving a first transaction response from the second network entity, in response to the second transaction request;
selecting a transaction response queue from a plurality of configured transaction response queues;
adding the first transaction response to the back of the selected transaction response queue; and
when the first transaction response reaches the front of the selected transaction response queue, processing the first transaction response by a transaction response handler associated with the selected transaction response queue and sending a second transaction response to the first network entity.

2. A method according to any preceding claim, wherein:
selecting the transaction request queue comprises performing load balancing for the plurality of configured transaction request queues; and
selecting the transaction response queue comprises performing load balancing for the plurality of configured transaction response queues.

3. A method according to any preceding claim wherein:
for at least one of the plurality of configured transaction request queues, a plurality of transaction request handlers are associated with the transaction request queue to process multiple transaction requests from the transaction request queue simultaneously; and/or
for at least one of the plurality of configured transaction response queues, a plurality of transaction response handlers are associated with the transaction response queue to process multiple transaction responses from the transaction response queue simultaneously.

4. A method according to any preceding claim, wherein:
the method comprises discarding a transaction request from a transaction request queue if the transaction request exceeds a first predetermined age before being processed.

5. A method according to claim 4, wherein, after discarding the transaction request from the transaction request queue, the method comprises:
sending a transaction failure message to the first network entity.

6. A method according to any preceding claim, wherein:
the method comprises discarding a transaction response from a transaction response queue if the transaction response exceeds a second predetermined age before being processed.

7. A method according to claim 6, wherein, after discarding the transaction response from a transaction response queue, the method comprises:
re-sending the second transaction request to the second network entity.

8. A method according to any preceding claim, wherein:
processing the first transaction request comprises adding a first transaction record to a database of ongoing transactions; and/or
processing the first transaction response comprises updating the first transaction record.

9. A method according to claim 8, wherein the first transaction record comprises the first transaction request or the second transaction request.

10. A method according to any preceding claim, wherein:
the first transaction request comprises a timestamp; and/or
the first transaction response comprises a timestamp.

11. A method according to any preceding claim, wherein the network entities are bank entities configured to perform payment transactions via the transaction manager.

12. A method according to any preceding claim, wherein processing the first transaction response and sending the second transaction response to the first network entity comprises:
sending, to a third network entity, a third transaction request based on the first transaction response;
receiving a third transaction response from the third network entity, in response to the third transaction request;
selecting a transaction response queue from a plurality of configured transaction response queues;
adding the third transaction response to the back of the selected transaction response queue;
when the third transaction response reaches the front of the selected transaction response queue, processing the third transaction response and sending the second transaction response to the first network entity.

13. A non-transitory computer-readable storage medium storing instructions thereon which, when executed by one or more processors, cause the processors to perform the method of any of claims 1 to 12.

14. A transaction manager apparatus configured to perform a method according to any preceding claim.

15. A system comprising:
a plurality of network entities; and
a transaction manager apparatus according to claim 14, configured to process a plurality of transactions among the plurality of network entities.
